# EUROPÄISCHE PATENTSCHRIFT

(11) **EP 3 728 879 B1**
(45) Veröffentlichungstag und Bekanntmachung des Hinweises auf die Patenterteilung: **01.12.2021**
(21) Anmeldenummer: 18800519.3
(22) Anmeldetag: 26.10.2018
(51) Int. Cl.: F16C 17/03, F16C 33/10

(54) **VERFAHREN ZUR REGELUNG EINES ÖLMASSENSTROMS BEI EINEM RADIAL-KIPPSEGMENT-LAGER**
PROCESS FOR ADJUSTING THE FLOW OF OIL IN A TILTING-PAD RADIAL BEARING
PROCÉDÉ DE RÉGULATION DE L'ÉCOULEMENT D'HUILE DANS UN PALIER RADIAL À SEGMENTS OSCILLANTS

(30) Priorität: 20.02.2018 DE 102018202529
(43) Veröffentlichungstag der Anmeldung: 28.10.2020
(73) Patentinhaber: Siemens Energy Global GmbH & Co. KG, 81739 München (DE)
(72) Erfinder: HOFMANN, Andreas, 79793 Horheim (DE)
(86) Internationale Anmeldenummer: PCT/EP2018/079365
(87) Internationale Veröffentlichungsnummer: WO 2019/161946

(56) Entgegenhaltungen:
- JP-A- 2003 120 675

## Beschreibung

Die Erfindung betrifft ein Radial-Kippsegment-Lager gemäß dem Oberbegriff des unabhängigen Patentanspruch 1 sowie ein Verfahren zur Regelung des Ölmassenstroms bei einem Radial-Kippsegment-Lager.

Für die radiale Lagerung von rotierenden Wellen werden üblicherweise Lager mit feststehenden Lagerschalen verwendet, die die Welle vollständig umschließen. Das Öl zur Schmierung des Lagers wird dabei über eine oder mehrere über den Lagerumfang verteilte, axiale verlaufende Nuten zugeführt. Gleitlager, bei denen die Lagerschale, längs des Umfangs durch Axialnuten in Teillagerflächen unterteilt ist, bezeichnet man auch als Mehrflächenlager mit festem Segment.

Für schnelllaufende Wellen kommen daher häufig Radial-Kippsegment-Lager zum Einsatz, bei denen der Wellenumfang nicht vollständig vom Lager umschlossen ist. Die Welle wird bei einem Radial-Kippsegment-Lager durch mehrere, in der Regel 3 bis 5, Kippsegmente gehalten, die je nach Belastung und Verwendungszweck des Lagers gleich oder ungleiche Umfangslängen aufweisen. Die Gleitlagerflächen der Kipplager-Segmente sind dabei üblicherweise kreiszylindrisch ausgebildet. Solche Radial-Kippsegment-Lager sind aus dem Stand der Technik, beispielsweise aus der DE 10 2011 1057 62 A1 hinlänglich bekannt.

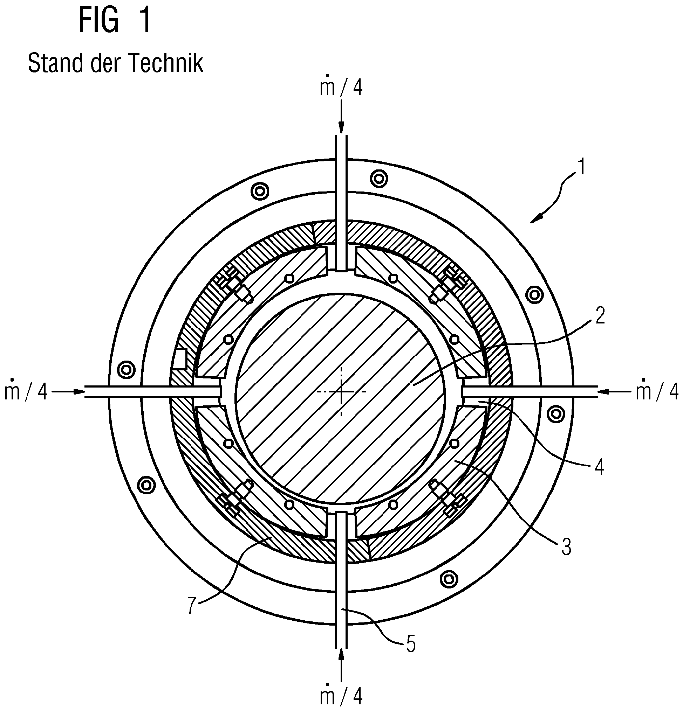

Die hydrodynamische Ölzuführung der Radial-Kippsegment-Lager erfolgt üblicherweise über die Öltaschen zwischen den einzelnen Kippsegmenten. In wenigen Fällen kann die Ölzuführung auch direkt in den Kippsegmenten erfolgen. Zur Regulierung des Ölmassenstroms werden dabei üblicherweise Düsen oder Blenden innerhalb der Lageranordnung verwendet. Die deutliche Mehrheit der Anwendungen weist dabei je Öltasche die gleiche Ölzuführgeometrie das heißt dieselben Düsen- und/oder Blendendurchmesser auf. Jedem Kipplager-Segment wird also der gleiche Ölmassenstrom zugeführt. Der Ölmassenstrom je Öltasche ergibt sich dabei durch den Gesamtölmassenstrom/Öltaschenanzahl. Figur 1 zeigt hierzu eine beispielhafte Ausführung eines Radial-Kippsegment-Lagers.

Der erforderliche Ölmassenstrom der Kippsegmente ist jedoch nicht gleichgroß und zudem abhängig vom jeweiligen Betriebspunkt. Die oberen Kippsegmente benötigen aufgrund des größeren Schmierspaltes beispielsweise mehr Öl. Bei Unterversorgung des Schmierspalts besteht die Gefahr des sogenannten Segmentflatterns. Diesem Zustand kann über eine taschenabhängige Ölmassenzuführung entgegen gewirkt werden. Hierbei werden Düsen- oder Blendenanzahl sowie Düsen- oder Blendendurchmesser öltaschenabhängig ausgelegt. Das Radial-Kippsegment-Lager ist hierdurch drehrichtungsunabhängig. Die Düsen oder Blenden werden dabei hinsichtlich ihrer Anzahl und/oder ihres Durchmessers dabei so ausgewählt, dass sie einen möglichst guten Kompromiss für die zu durchfahrenden Betriebspunkte darstellen.

Die JP 2003120675A offenbart ein Radial-Kippsegment-Lager, bei dem über eine gemeinsame Ölzufuhr das Radial-Kippsegment-Lager mit einem Gesamtmassenstrom beaufschlagbar ist, wobei jede Öltasche eine eigene regelbare Ölzufuhr aufweist. Die Regelung erfolgt dabei manuell über von Hand zu regulierende Ventile, wobei die Regelung alleine anhand der Temperatur der Kippsegmente erfolgt. Je nach Lastpunkt muss die Ölmenge dabei zeitintensive und iterativ von Hand nachgeregelt werden.

Aufgabe der vorliegenden Erfindung ist es, ein gegenüber dem Stand der Technik verbessertes Verfahren zur Regelung des gesamt Ölmassenstrom bei einem Radial-Kippsegment-Lager bereit zu stellen. Die Aufgabe wird durch die Merkmale der unabhängigen Patentansprüche 1 und 2 gelöst.

Ein erstes erfindungsgemäßes Verfahren zur Regelung des gesamt Ölmassenstrom bei einem Radial-Kippsegment-Lager zur Lagerung einer Welle, wobei das Radial-Kippsegment-Lager mehrere, über den Umfang des Radial-Kippsegment-Lagers verteilte und zueinander beabstandete Kippsegmente umfassen und wobei zwischen den einzelnen Kippsegmenten Öltaschen ausgebildet sind, die über eine Ölzuführung mit einem Ölmassenstrom beaufschlagbar sind, und wobei jede Öltasche eine eigene individuell regelbare Ölzuführung aufweist, über die der Ölmassenstrom, der der jeweiligen Öltasche zugeführt wird, einstellbar ist zeichnet sich dadurch aus, dass der jeweilige Ölmassenstrom, der jeder Öltasche über die jeweilige Ölzuführung zugeführt wird, bedarfsgerecht erfolgt, und der jeweilige Ölmassenstrom je Öltasche so eingestellt wird, dass die Wellenamplitude und/oder die Lagertemperatur und/oder die Verlustleistung ein Minimum erreicht, wobei die Regelung des gesamt Ölmassenstrom und des jeweilige Ölmassenstrom anhand von festen Kennlinien erfolgt. Durch die für jede Öltasche eigene individuelle regelbare Ölzuführung kann der Öldurchsatz im Vergleich zu den konventionellen Radial-Kippsegment-Lagern deutlich reduziert werden. Gleichzeitig kann die Gefahr einer Unterversorgung des Schmierspaltes insbesondere im Bereich der oberen Kippsegmente wirkungsvoll vermieden werden, wodurch die Gefahr des Segmentflatterns ausgeschlossen werden kann. Eine bedarfsgerechte Ölzuführung bedeutet, dass den einzelnen Öltaschen vorzugsweise nur jeweils so viel Öl zugeführt wird wie diese für einen einwandfreien Betrieb des Radial-Kippsegment-Lagers nötig ist.

Eine vorteilhafte Ausgestaltung der Erfindung sieht vor, dass die Ölzuführung ein Drosselventil umfasst. Über das Drosselventil in der Ölzuführung kann der Ölbedarf auf einfache Weise individuell angepasst werden. Auch eine Nachrüstung bestehender Radial-Kippsegment-Lager ist möglich.

Die Verlustleistung lässt sich dabei auf einfache Weise über einen Temperaturvergleich zwischen der Öleintrittstemperatur und der Ölaustrittstemperatur ermitteln.

Die Regelung des gesamt Ölmassenstroms und des jeweiligen Ölmassenstroms je Öltasche erfolgt anhand von festen Kennlinien. Die Regelung über feste Kennlinie ist besonders einfach, da die Kennlinien nur einmal aufgenommen werden müssen und die Regelung danach entsprechende dieser Kennlinien erfolgt.

Ein zweites erfindungsgemäßes Verfahren zur Regelung des gesamt Ölmassenstrom bei einem Radial-Kippsegment-Lager zur Lagerung einer Welle, wobei das Radial-Kippsegment-Lager mehrere, über den Umfang des Radial-Kippsegment-Lagers verteilte und zueinander beabstandete Kippsegmente umfassen und wobei zwischen den einzelnen Kippsegmenten Öltaschen ausgebildet sind, die über eine Ölzuführung mit einem Ölmassenstrom beaufschlagbar sind, und wobei jede Öltasche eine eigene individuell regelbare Ölzuführung aufweist, über die der Ölmassenstrom, der der jeweiligen Öltasche zugeführt wird, einstellbar ist zeichnet sich dadurch aus, dass der jeweilige Ölmassenstrom, der jeder Öltasche über die jeweilige Ölzuführung zugeführt wird, bedarfsgerecht erfolgt, und der jeweilige Ölmassenstrom je Öltasche so eingestellt wird, dass die Wellenamplitude und/oder die Lagertemperatur und/oder die Verlustleistung ein Minimum erreicht, wobei die Regelung des gesamt Ölmassenstrom und des jeweilige Ölmassenstrom mittels eines selbstlernenden Systems erfolgt. Hierbei werden keine festen Kennlinien aufgenommen, sondern das System lernt selbständig welche Einstellungen notwendig sind um die Wellenamplitude und/oder die Lagertemperatur und/oder die Verlustleistung auf ein Minimum zu reduzieren. Die selbstlernenden Systeme sorgen für eine noch genauere Regelung des Ölmassenstroms und damit für eine verbesserten Betrieb des Radial-Kippsegment-Lagers.

Das erfindungsgemäße Verfahren wurde nur anhand eines Radial-Kippsegment-Lagers beschrieben. Grundsätzlich kann das erfindungsgemäße Verfahren auch für sämtliche anderen hydrodynamischen Lager eingesetzt werden, ohne dass hierdurch der Bereich der Erfindung verlassen wird.

Durch das erfindungsgemäße Verfahren zur Regelung des Ölmassenstroms bei einem solchen Radial-Kippsegment-Lager ergeben sich folgende Vorteile:
- Reduzierung des gesamt Ölmassenstroms im Vergleich zum konventionellen Radial-Kippsegment-Lager,
- Reduktion der Reibverluste (die Reibverluste sind im Wesentlichen abhängig vom Ölmassenstrom),
- Möglichkeit zur Optimierung der Rotordynamik (mit Varianz des Öldurchsatzes können Feder- und Dämpfungszahl des Lagers bestimmt werden und damit auch die Rotordynamik beeinflusst werden).

Nachfolgend sollen weitere Vorteile der Erfindung anhand eines Ausführungsbeispiels erläutert werden. Es zeigen:
- Figur 1: ein Radial-Kippsegment-Lager nach dem Stand der Technik;
- Figur 2: ein zweites Ausführungsbeispiel eines Radial-Kippsegment-Lagers nach dem Stand der Technik und
- Figur 3: ein Radial-Kippsegment-Lager mit individuell regelbarer Ölzuführung, welches für die erfindungsgemäßen Verfahren zur Regelung des gesamt Ölmassenstrom eingesetzt werden kann.

Bei den Figuren handelt es sich jeweils um stark vereinfachte Darstellungen, bei denen im Wesentlichen nur die zur Beschreibung der Erfindung notwendigen Bauteile gezeigt sind. Gleiche bzw. funktionsgleiche Bauteile sind figurübergreifend mit denselben Bezugszeichen verstehen. Die Figuren sind nicht zwangsläufig maßstabgerecht dargestellt.

Figur 1 zeigt eine Radial-Kippsegment-Lager nachdem Stand der Technik. Das Radial-Kippsegment-Lager 1 dient zur Lagerung einer Welle 2 und umfasst mehrere, über den Umfang des Radial-Kippsegment-Lager 1 verteilte und zueinander beabstandete Kippsegmente 3. Zwischen den einzelnen Kippsegmenten 3 sind Öltaschen 4 ausgebildet, die über Ölzuführungen 5 mit einem gesamt Ölmassenstrom m beaufschlagbar sind. Anstelle von Öl können auch andere geeignete Schmiermittel zugeführt werden. Das im Ausführungsbeispiel gezeigte Radial-Kippsegment-Lager 1 weist 4 gleich große Kippsegmente 3 auf. Üblicherweise verfügen Radial-Kippsegmente-Lager über 3 bis 5 Kippsegmente, wobei dies je nach Radial-Kippsegment-Lager variieren kann. Zur Regulierung des Ölmassenstroms ṁ werden üblicherweise Düsen oder Blenden 5 eingesetzt. Im Ausführungsbeispiel nach Figur 1 weist jede Ölzuführung die gleiche Ölzuführungsgeometrie (Düsen, Blendendurchmesser) auf und jedem Kippsegmente 3 wird der gleiche Ölmassenstrom m/4 zugeführt. Der Ölbedarf der einzelnen Kippsegmente 3 ist jedoch nicht gleichgroß und zudem abhängig vom Betriebspunkt. Die oberen Kippsegmente 3 benötigen aufgrund des größeren Schmierspalts beispielsweise mehr Öl als der untere Schmierspalt. Bei einer Unterversorgung des Schmierspalts mit Öl besteht die Gefahr des Segmentflatterns.

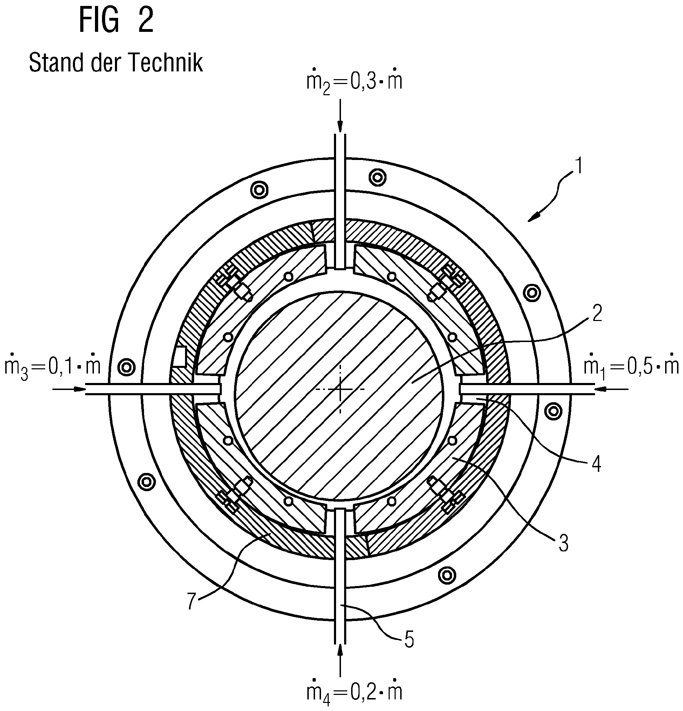

Figur 2 zeigt ein zweites Ausführungsbeispiel eines Radial-Kippsegment-Lages 1 nach dem Stand der Technik. Bei diesem Ausführungsbeispiel erfolgt eine taschenabhängige Ölzuführung, dabei errechnet sich der gesamt Ölmassenstrom m aus der Addition der Ölmassenströme ṁ₁, ṁ₂, m₃, m₄. Dies kann Beispielsweise über eine unterschiedliche Anzahl an Düsen/Blenden 3 und/oder Düsen-Blendendurchmessern erreicht werden. Die Anzahl der Düsen/Blenden und/oder des Düsen-Blendendurchmessers wird dabei als Kompromiss aus den zu durchfahrenden Betriebspunkten gewählt. Ein solches Radial-Kippsegment-Lager 1 ist drehrichtungsabhängig.

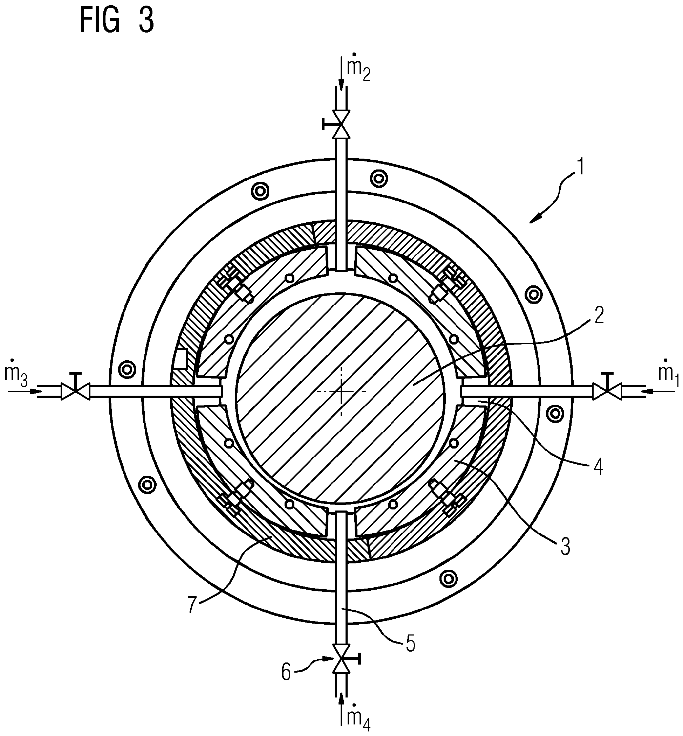

Figur 3 zeigt ein Radial-Kippsegment-Lager 1 zur Lagerung einer Welle 2, welches bei den erfindungsgemäßen Verfahren zur Regelung des gesamt Ölmassenstrom (ṁ) bei eingesetzt wird.

Der prinzipielle Aufbau des Radial-Kippsegment-Lager 1 ist wiederum identisch zu den Ausführungsbeispielen in Figuren 1 und 2. Im Gegensatz zu den aus dem Stand der Technik bekannten Radial-Kippsegment-Lagern weist das Radial-Kippsegment-Lager 1 jedoch eine für jede Öltasche 4 eigene individuell regelbare Ölzufuhr 5 auf, über die der jeweilige Ölmassenstrom ṁ₁, m₂, m₃, m₄ der der jeweiligen Öltasche 4 zugeführt wird, einstellbar ist. Der gesamt Ölmassenstrom ṁ ergibt sich aus einer Addition der Ölmassenströme ṁ₁, m₂, m₃, m₄. Die jeweiligen Ölzuführungen 5 weisen jeweils ein eigenes Drosselventil 6 auf über das der jeweilige Ölmassenstrom ṁ₁- ṁ₄ für die jeweilige Öltasche 4 individuell einstellbar ist. Die erfindungsgemäßen Verfahren zur Regelung des gesamt Ölmassenstrom m sehen vor, dass der jeweilige Ölmassenstrom ṁ₁-m₄ der der jeweiligen Öltasche 4 über die jeweilige Ölzuführung 5 zugeführt wird bedarfsgerecht erfolgt. Durch die bedarfsgerechte Zuführung des jeweilige Ölmassenstrom ṁ₁-ṁ₄ ist es nicht notwendig wie beim Stand der Technik, die Düsen als Kompromiss für die zu durchfahrenden Betriebspunkte zu wählen. Der Ölmassenstrom zu den einzelnen Öltaschen 4 kann vielmehr abhängig vom Lagerspalt und dem jeweiligen Betriebspunkt gewählt werden. Der jeweilige Ölmassenstrom ṁ₁-ṁ₄ je Öltasche 4 wird dabei so eingestellt, dass die Wellenamplitude und/oder die Lagertemperatur und/oder die Verlustleistung ein Minimum erreicht. Sowohl die Wellenamplitude als auch die Lagertemperatur können auf einfachem Wege ermittelt werden. Die Verlustleistung lässt sich ebenfalls leicht über die Temperaturdifferenz des Öls zwischen Eintritt und Austritt ermitteln. Die Regelung des gesamt Ölmassenstrom m sowie der jeweiligen Ölmassenströme ṁ₁-ṁ₄ können bei einem ersten erfindungsgemäßen Verfahren auf einfache Weise anhand fester Kennlinien erfolgen. Bei einem zweiten erfindungsgemäßen Verfahren zur Regelung des gesamt Ölmassenstrom m bei dem Radial-Kippsegment-Lager 1 erfolgt die Regelung des gesamt Ölmassenstrom m sowie der jeweiligen Ölmassenströme ṁ₁-ṁ₄ mittels eines selbstlernenden Systems. Hierbei werden keine festen Kennlinien aufgenommen und abgefahren, sondern das System lernt selbständig bei welchem Ölmassenstrom die geringste Wellenamplitude und/oder die geringste Lagertemperatur und/oder die geringste Verlustleistung auftreten und stellt sich somit selbständig ein.

Zusammenfassend lässt sich somit feststellen, dass erfindungsgemäße Verfahren zur Regelung des gesamt Ölmassenstrom ṁ bei einem solchen Radial-Kippsegment-Lager 1 zu einer deutlichen Reduktion des Öldurchsatzes im Vergleich zu konventionellen Ölzuführung führt. Darüber hinaus können die Reibverluste welche abhängig sind vom Öldurchsatz ebenfalls deutlich reduziert werden. Durch die Varianz des Ölmassenstroms können des Weiteren die Feder- und Dämpfungszahlen des Lagers verstimmt werden und damit das Rotordynamikverhalten optimiert werden.

## Patentansprüche

1. Verfahren zur Regelung des gesamt Ölmassenstrom (ṁ) bei einem Radial-Kippsegment-Lager (1), wobei das Radial-Kippsegment-Lager (1) zur Lagerung einer Welle (2) ausgebildet ist und mehrere, über den Umfang des Radial-Kippsegment-Lagers (1) verteilte und zueinander beabstandete Kippsegmente (3) umfasst, wobei zwischen den einzelnen Kippsegmenten (3) Öltaschen (4) ausgebildet sind, die über eine Ölzuführung (5) mit einem gesamt Ölmassenstrom (m) beaufschlagbar sind,
wobei jede Öltasche (4) eine eigene individuell regelbare Ölzuführung (5) aufweist, über die der jeweilige Ölmassenstrom (ṁ₁, ṁ₂, m₃, m₄), der der jeweiligen Öltasche (4) zugeführt wird, einstellbar ist,
**dadurch gekennzeichnet, dass**
der jeweilige Ölmassenstrom (ṁ₁, m₂, m₃, m₄), der jeder Öltasche (4) über die jeweilige Ölzuführung (5) zugeführt wird, bedarfsgerecht erfolgt, und der jeweilige Ölmassenstrom (ṁ₁, m₂, m₃, ṁ₄) je Öltasche (4) so eingestellt wird, dass die Wellenamplitude und/oder die Lagertemperatur und/oder die Verlustleistung ein Minimum erreicht, wobei die Regelung des gesamt Ölmassenstrom (m) und des jeweilige Ölmassenstrom (ṁ₁, m₂, m₃, m₄) anhand von festen Kennlinien erfolgt.

2. Verfahren zur Regelung des gesamt Ölmassenstrom (ṁ) bei einem Radial-Kippsegment-Lager (1) , wobei das Radial-Kippsegment-Lager (1) zur Lagerung einer Welle (2) ausgebildet ist und mehrere, über den Umfang des Radial-Kippsegment-Lagers (1) verteilte und zueinander beabstandete Kippsegmente (3) umfasst, wobei zwischen den einzelnen Kippsegmenten (3) Öltaschen (4) ausgebildet sind, die über eine Ölzuführung (5) mit einem gesamt Ölmassenstrom (ṁ) beaufschlagbar sind,
wobei jede Öltasche (4) eine eigene individuell regelbare Ölzuführung (5) aufweist, über die der jeweilige Ölmassenstrom (ṁ₁, m₂, ṁ₃, ṁ₄), der der jeweiligen Öltasche (4) zugeführt wird, einstellbar ist,
**dadurch gekennzeichnet, dass**
der jeweilige Ölmassenstrom (m₁, m₂, m₃, m₄), der jeder Öltasche (4) über die jeweilige Ölzuführung (5) zugeführt wird, bedarfsgerecht erfolgt und der jeweilige Ölmassenstrom (m₁, m₂, m₃, m₄) je Öltasche (4) so eingestellt wird, dass die Wellenamplitude und/oder die Lagertemperatur und/oder die Verlustleistung ein Minimum erreicht, wobei die Regelung des gesamt Ölmassenstrom (ṁ) und des jeweilige Ölmassenstrom (ṁ₁, m₂, m₃, m₄) mittels eines selbstlernenden Systems erfolgt.

## Claims

1. Method for closed-loop controlling the total oil mass flow (m) in a radial tilting pad bearing (1), wherein the radial tilting pad bearing (1) is configured for mounting a shaft (2) and comprises a plurality of tilting pads (3) which are distributed and mutually spaced apart across the circumference of the radial tilting pad bearing (1), wherein oil pockets (4) which by way of an oil supply (5) are able to be impinged by a total oil mass flow (m) are configured between the individual tilting pads (3);
wherein each oil pocket (4) has a dedicated oil supply (5) which is able to be individually closed-loop controlled and by way of which the respective oil mass flow (ṁ₁, m₂, m₃, ṁ₄) that is supplied to the respective oil pocket (4) is able to be adjusted,
**characterized in that**
the respective oil mass flow (ṁ₁, m₂, m₃, m₄) which by way of the respective oil supply (5) is supplied to each oil pocket (4) takes place according to demand, and the respective oil mass flow (ṁ₁, m₂, m₃, m₄) per oil pocket (4) is adjusted such that the wave amplitude and/or the bearing temperature and/or the power loss reaches a minimum, wherein the closed-loop controlling of the total oil mass flow (ṁ) and of the respective oil mass flow (ṁ₁, m₂, m₃, m₄) takes place by means of fixed characteristic curves.

2. Method for closed-loop controlling the total oil mass flow (m) in a radial tilting pad bearing (1), wherein the radial tilting pad bearing (1) is configured for mounting a shaft (2) and comprises a plurality of tilting pads (3) which are distributed and mutually spaced apart across the circumference of the radial tilting pad bearing (1), wherein oil pockets (4) which by way of an oil supply (5) are able to be impinged by a total oil mass flow (m) are configured between the individual tilting pads (3);
wherein each oil pocket (4) has a dedicated oil supply (5) which is able to be individually closed-loop controlled and by way of which the respective oil mass flow (ṁ₁, m₂, m₃, ṁ₄) that is supplied to the respective oil pocket (4) is able to be adjusted,
**characterized in that**
the respective oil mass flow (ṁ₁, m₂, m₃, m₄) which by way of the respective oil supply (5) is supplied to each oil pocket (4) takes place according to demand, and the respective oil mass flow (ṁ₁, m₂, m₃, m₄) per oil pocket (4) is adjusted such that the wave amplitude and/or the bearing temperature and/or the power loss reaches a minimum, wherein the closed-loop controlling of the total oil mass flow (ṁ) and of the respective oil mass flow (ṁ₁, m₂, m₃, m₄) takes place by means of a self-learning system.

## Revendications

1. Procédé de régulation du débit massique d'huile total (m) dans un palier radial à segments oscillants (1), dans lequel le palier radial à segments oscillants (1) est conçu pour le montage d'un arbre (2) et comprend une pluralité de segments oscillants (3) répartis sur la circonférence du palier radial à segments oscillants (1) et espacés les uns des autres, dans lequel des poches d'huile (4) sont formées entre les segments oscillants individuels (3), qui peuvent être sollicitées par un débit massique d'huile total (m) par l'intermédiaire d'une alimentation en huile (5),
dans lequel chaque poche d'huile (4) présente une alimentation en huile pouvant être commandée individuelle propre (5) par l'intermédiaire de laquelle le débit massique d'huile respectif (ṁ₁, m₂, m₃, m₄) qui est fourni à la poche d'huile respective (4), peut être ajusté,
**caractérisé en ce que**
le débit massique d'huile respectif (ṁ₁, ṁ₂, m₃, m₄), qui est alimenté vers chaque poche d'huile (4) par l'alimentation en huile respective (5), s'effectue en fonction des besoins, et le débit massique d'huile respectif (ṁ₁, m₂, m₃, m₄) par poche d'huile (4) est réglé de telle sorte que l'amplitude des ondes et/ou la température de palier et/ou la perte de puissance atteint un minimum, dans lequel le réglage du débit massique d'huile total (m) et du débit massique d'huile respectif (ṁ₁, m₂, m₃, ṁ₄) s'effectue sur la base de courbes caractéristiques fixes.

2. Procédé de régulation du débit massique d'huile total (m) dans un palier à segments oscillants radial (1) , dans lequel le palier à segments oscillants radial (1) est conçu pour le montage d'un arbre (2) et comprend une pluralité de segments oscillants (3) répartis sur la circonférence du palier à segments oscillants radial (1) et espacés les uns des autres, dans lequel des poches d'huile (4) sont formées entre les segments oscillants individuels (3), qui peuvent être sollicitées par un débit massique total d'huile (m) par l'intermédiaire d'une alimentation en huile (5),
dans lequel chaque poche d'huile (4) présente une alimentation en huile pouvant être commandée individuelle propre (5) par l'intermédiaire de laquelle le débit massique d'huile respectif (ṁ₁, m₂, m₃, m₄) qui est fourni à la poche d'huile respective (4), peut être ajusté,
**caractérisé en ce que**
le débit massique d'huile respectif (ṁ₁, m₂, m₃, m₄), qui est alimenté vers chaque poche d'huile (4) par l'alimentation en huile respective (5), s'effectue en fonction des besoins, et le débit massique d'huile respectif (ṁ₁, m₂, m₃, m₄) par poche d'huile (4) est réglé de telle sorte que l'amplitude des ondes et/ou la température de palier et/ou la perte de puissance atteint un minimum, dans lequel le réglage du débit massique d'huile total (m) et du débit massique d'huile respectif (ṁ₁, m₂, m₃, m₄) s'effectue sur la base de courbes caractéristiques fixes.
